Europäisches Patentamt

European Patent Office

Office européen des brevets

(11) Publication number: **0 470 656 A1**

# EUROPEAN PATENT APPLICATION

(21) Application number: **91201872.8**

(22) Date of filing: **16.07.91**

(51) Int. Cl.5: **F01N 1/06**, F02M 35/12, G10K 11/16

(30) Priority: **10.08.90 US 565395**

(43) Date of publication of application:
**12.02.92 Bulletin 92/07**

(84) Designated Contracting States:
**DE FR GB IT**

(71) Applicant: **GENERAL MOTORS CORPORATION**
**General Motors Building 3044 West Grand Boulevard**
**Detroit Michigan 48202(US)**

(72) Inventor: **Pfaff, Donald Paul**
**46900 Partridge Creek Drive**
**Mount Clemens, MI 48044(US)**
Inventor: **Kapsokavathis, Nick S.**
**53440 Woodbridge Drive**
**Rochester, MI 48064(US)**

(74) Representative: **Denton, Michael John et al**
**Patent Section Vauxhall Motors Limited 1st Floor Gideon House 26 Chapel Street**
**Luton Bedfordshire LU1 2SE(GB)**

(54) Method and apparatus for attenuating engine noise.

(57) Apparatus for attenuating noise generated by an internal combustion engine (10), which comprises an exhaust system (14) and an air intake system (12) including a throttle valve (16) for regulating air flow to the engine; the apparatus comprising a microphone (24) for deriving a noise value (INPUT) representative of the noise generated by the engine; a throttle position sensor (18) for deriving a loading valve (TP) indicative of engine loading; and a controller (26) for modulating the amplitude of the noise value as a function of the engine loading value and for attenuating the noise generated by the engine (10) on the basis of the modulated noise value. The apparatus and method improve the response of the system to abrupt changes in engine loading.

FIG.1

This invention relates to a method and apparatus for attenuating noise generated by an internal combustion engine, and more particularly, to a method and apparatus for improving the response of such systems to abrupt changes in engine loading.

Conventional active noise control systems attenuate undesirable noise, in the form of acoustic waves or vibrations propagating from a noise source, by producing and superimposing noise cancelling waves, that are substantially equal in amplitude and frequency content, but shifted 180 degrees in phase with respect to the noise source waves. Recently, this has been achieved through the use of modern digital signal processing and adaptive filtering techniques. A signal, which represents characteristics of the noise generated by the source, is derived from a sensor and processed to develop an input signal for an adaptive filter. This input is transformed by the adaptive filter into an output signal, which drives a speaker or actuator that produces cancelling acoustic waves or vibrations. Generally, an error sensor, such as a microphone or accelerometer, is employed to measure the observed noise level resulting from the superimposition of the original noise and cancelling acoustic waves or vibrations, and to develop an associated error feedback signal. This feedback signal provides the basis for modifying the parameters of the adaptive filter to minimize the level of the observed noise.

In the past, such systems have been successfully applied to attenuate noise propagating down heating and air ventilating ducts. Typically, the level of noise encountered in these applications varies relatively slowly compared with the processing and adaptation time of the active noise control system.

When these techniques are employed to reduce noise generated by an internal combustion engine, the frequency of which varies as a function of engine rotational speed, differences are encountered. For example, the amplitude of acoustic noise in the engine air intake or exhaust system varies quite rapidly with abrupt changes in engine loading, such as, when the engine is quickly accelerated or decelerated. The occurrence of the corresponding amplitude changes in signals derived to represent the engine noise are significantly delayed in time, due to inherent limitations in conventional techniques used in characterizing or measuring the engine noise. As a consequence, an active noise control system will continue generating cancelling sound waves, based on the previously indicated level of engine noise, until the system has time to adapt. This results in an undesirable short burst in the observed engine noise level, due to the system delay in generating a correct noise cancelling waveform.

Consequently, a need exists for an active noise control system for attenuating engine generated noise, which is capable of rapidly responding to abrupt changes in engine loading.

The present invention seeks to provide an improved method and apparatus for attenuating engine noise.

Accordingly, an aspect of the present invention provides a method of attenuating noise generated by an internal combustion engine as defined in claim 1.

With the invention, the time required for an active noise control system to respond to abrupt changes in engine loading can be greatly reduced. As a result, undesirable short bursts in the observed engine noise, due to delayed system response, can be substantially eliminated.

In an embodiment, a noise cancelling waveform is superimposed on the engine generated noise. In practice, the noise cancelling waveform will have substantially the same amplitude and frequency content as the noise to be attenuated, but will be shifted in phase by 180 degrees. Preferably, the cancelling waveform is generated by adaptively filtering the amplitude modulated input signal that is used to represent the engine noise.

Advantageously, an indication of engine loading is preferably derived by measuring the position of the air intake throttle valve located within the engine air intake system; however, other measures of engine loading such as mass air flow or intake manifold pressure can also be utilized. When the method is employed to attenuate acoustic noise propagating in the engine air intake system, the amplitude of the signal derived to represent the noise is preferably modulated as a linear function of the throttle valve position. When the engine noise to be attenuated is propagating in the exhaust system, the amplitude of the signal indicating engine noise is preferably modulated on the basis of a predetermined schedule as a function of the position of the throttle valve.

According to another aspect of the present invention, there is provided apparatus for attenuating noise generated by an internal combustion engine as defined in claim 8.

The present invention has the advantage of being applicable to the attenuation of acoustic engine noise generated in either the exhaust or air intake system.

The signal representing acoustic engine noise can be derived directly by measuring the engine noise with a microphone, or indirectly by measuring the engine rotational speed.

It will also be recognized by those skilled in the art, that the present invention is equally applicable to active noise control systems used to attenuate engine generated vibrational noise. In such systems, the engine is typically mounted on electromagnetic shaker mounts, which function as actuators to produce cancelling vibrations, and accelerometers are used in place of acoustic microphones to sense vibrational noise (see for example, "Adaptive Control of a Two-Stage Vibrational Mount", S. D. Sommerfeldt and J. Tichy, 1988, IEEE, CH 2531-2/88/0000-2039, pp. 2039-2044).

Embodiments are also possible where induction, exhaust, and/or vibrational engine noise could be cancelled using a single noise controller, programmed to function as a multi-channel adaptive filter.

Some embodiments of the present invention are described below, by way of illustration only, with reference to the accompanying drawings, in which:

Figure 1 is a schematic diagram of an embodiment of active noise control system employed to attenuate engine induction noise;

Figures 2(A) to (E) graphically illustrate approximate waveforms associated with the operation of the noise control system of Figure 1;

Figure 3 is a flow diagram representative of the instructions of an embodiment of routine executed by the noise control system of Figure 1;

Figure 4 is a schematic diagram of an embodiment of active noise control system employed to attenuate engine exhaust noise; and

Figure 5 is a flow diagram representative of the program instructions of an embodiment routine executed by the noise control system of Figure 4.

Specific details related to the noise controller and adaptive digital filtering of the described embodiments are not included here, due to the availability of numerous publications and texts, which adequately describe their usage and application in active noise control systems, see for example, Adaptive Signal Processing, B. Widrow and S. Sterns, Englewood Cliffs, New Jersey, Prentice-Hall, Inc., 1985, pp. 196, 197, 222, 223; "An Analysis of Multiple Correlation Cancellation Loops with a Filter in the Auxiliary Path", D. R. Morgan, IEEE Transactions on Acoustic Speech Signal Processing, Vol. ASSP-28, No. 4, 1980, pp. 454-467; "The Implementation of Digital Filters Using a Modified Widrow-Hoff Algorithm for the Adaptive Cancellation of Acoustic Noise", L. A. Poole, G. E. Warnaka and R. C. Cutter, 1984, IEEE, CH 145-5/84/000-0233, pp. 21.7.1-21.7.4; "Active Noise Control Using Adaptive Digital Signal Processing", L. J. Eriksson, M. C. Allie, C. D. Bremigan, and R. A. Greiner, 1988, IEEE, CH 2561-9/88/0000-2594, pp. 2594-2601; and "Adaptive Control of a Two-Stage Vibration Mount", S. D. Sommerfeldt and J. Tichy, 1988, IEEE, CH 2531-2/88/0000-2039, pp.2039-2044.

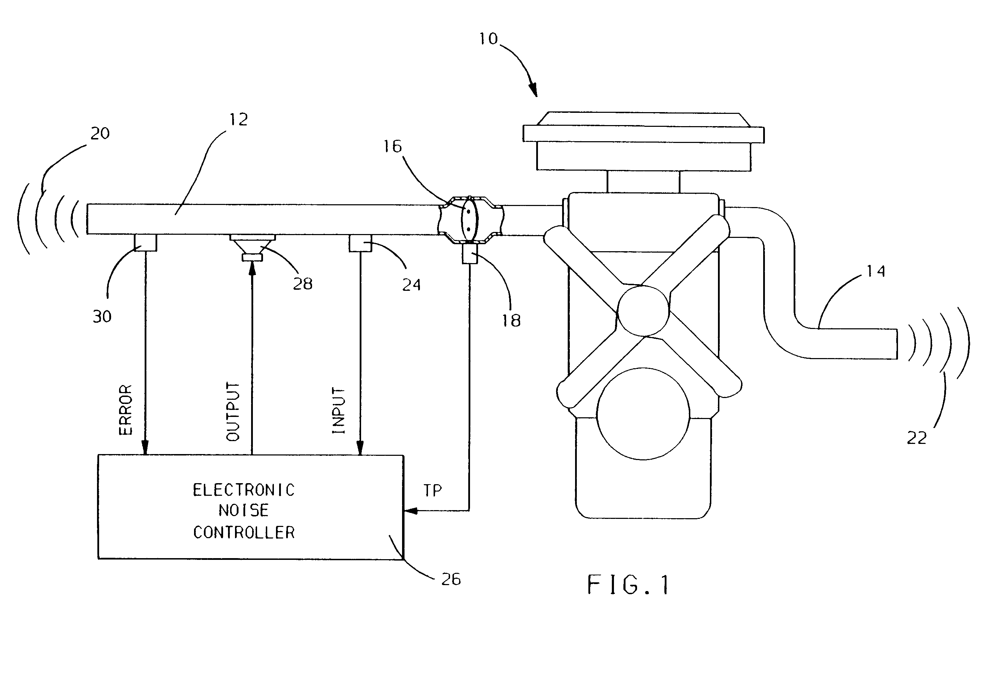

Referring to Figure 1, there is shown schematically an internal combustion engine, generally designated as 10, with its associated air intake system 12 and exhaust system 14. A rotatable throttle valve 16 is included within the air intake system 12 for regulating air flow to the engine 10. Connected to throttle valve 16 is a standard throttle position sensor 18, such as a potentiometer, which develops an electrical signal TP related to degree or percent of throttle valve opening.

During the operation of engine 10, acoustic pressure waves are generated and propagate away from the engine through the ducts and tubes forming the air intake and exhaust systems. Eventually, these acoustic pressure waves propagate from openings in the intake and exhaust systems as observable engine induction noise 20 and exhaust noise 22. Both engine induction noise 20 and exhaust noise 22 contain repetitive noise components, that occur at frequencies harmonically related to one-half of the engine rotational speed, assuming two rotations are required to complete one engine cycle as in a four-stroke engine.

Figure 1 illustrates a system for reducing acoustic induction noise 20 generated by engine 10. An input microphone 24 is provided to derive an indication of the noise generated by engine 10, and to develop a corresponding, representative analog signal, designated as INPUT, that is directed to an electronic noise controller 26. Based upon this INPUT signal, the electronic controller produces an out-of-phase cancelling signal designated as OUTPUT. This OUTPUT signal drives cancellation speaker 28, or any other suitable type of actuator that can generate the cancelling waves to be superimposed with the engine noise propagating inside air intake system 12.

Typically, an error microphone 30, or other suitable sensor, is employed to measure the level of the attenuated noise remaining after the superposition of the cancelling acoustic waves, and to develop a corresponding analog ERROR feedback signal. This ERROR signal is directed to electronic noise controller 26, and provides the basis for minimizing the observed induction noise 20 propagating out of engine 10.

In this embodiment, the electronic noise controller 26 can be of any analog or digital configuration known to those skilled in the art, which functions in the above described manner. Preferably, it includes a standard digital signal processor with the necessary interfacing circuitry such as analog amplifiers and filters, analog-to-digital and digital-to-analog converters, frequency multipliers, counters, clocks, and other known input/output signal processing circuitry.

Digital signal processors are commercially available, for example the Motorola 56000, and typically contain a central processing unit for carrying out instructions and arithmetic operations, random access memory for storing data, and read only memory for permanently storing program instruction. When utilized for active noise control, the digital signal processor is typically programmed to function as an adaptive digital filter.

The electronic noise controller 26 continuously samples the amplitude value of the analog signals INPUT and ERROR at a fixed sampling rate, and retains in memory a predetermined number n of the previously sampled values of these signals. These samples are used in computing the corresponding sample values for the OUTPUT signal, according to the programmed adaptive filtering algorithm.

In the following description, samples of the analog INPUT and ERROR signals will be denoted as INPUT(i) and ERROR(i), where i is an integer ranging in value from 0 to n, corresponding to the number of a particular sample in the sequence of stored previous sample values. Likewise, OUTPUT(i) designates samples of the analog OUTPUT signal.

Electronic noise controller 26 converts the digital samples OUTPUT(i) into an analog waveform, which is then appropriately amplified to form the OUTPUT signal, used for driving speaker 28. The sampled feedback signal ERROR(i) is used to update continuously the weighting coefficients of the adaptive filter, which determine the filter magnitude and phase characteristics, in order to minimize the observed induction noise 20 propagating from engine 10.

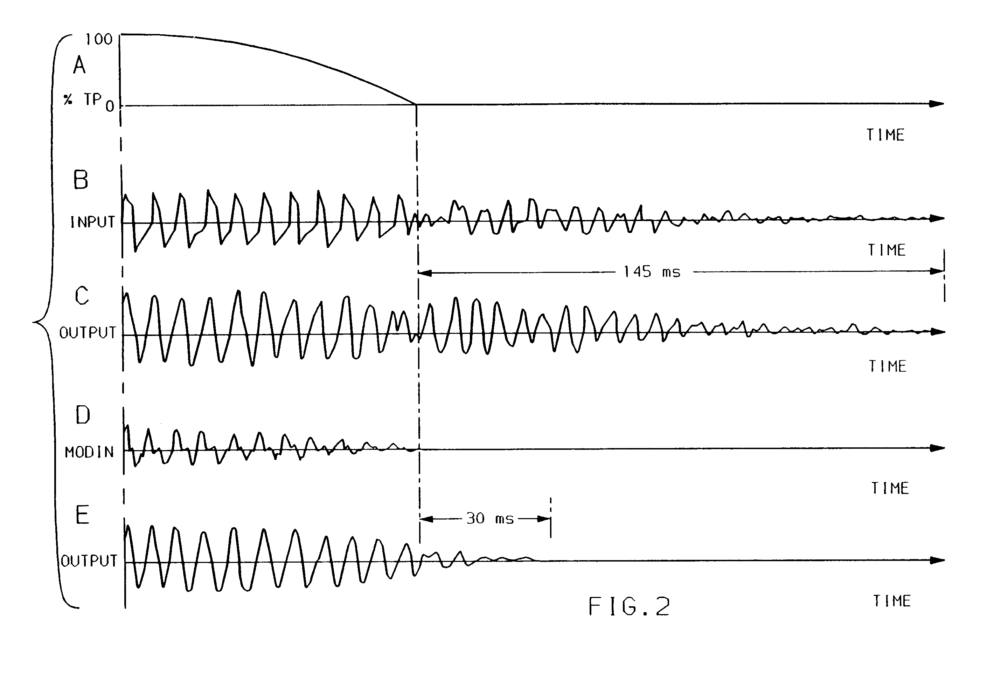

Referring now to Figures 2(A)-2(C), the response of the electronic noise controller 26 to an abrupt change in engine loading is illustrated by the time histories of approximate waveforms representing the engine throttle position TP and the controller analogue INPUT and OUTPUT signals. These waveforms represent the measured behavior of a typical active noise cancellation system which was employed to attenuate the induction noise generated by a four-cylinder engine operating at 4000 rpm.

Figure 2(A) indicates the interval of time associated with a rapid closure of throttle valve 16, from its wide open position (100%), to its completely closed position (0%). This closure of throttle valve 16 occurs in approximately 70 milliseconds, and represents an abrupt decrease in engine loading.

When the throttle valve is wide open, the induction noise generated by engine 10 is at its maximum level, but as the throttle closes, the air flow to the engine is blocked, and the level of the induction noise decreases. When the throttle is completely closed, the induction noise is reduced to zero in the vicinity of input microphone 24.

Figure 2(B) shows the corresponding INPUT signal developed by input microphone 24, as throttle valve 16 is closed. Even though the engine induction noise is eliminated when the throttle is closed, the INPUT signal indicates the presence of sound waves in the air intake system 12. These sound waves are produced by speaker 28, as driven by the OUTPUT signal shown in Figure 2(C). Due to the sound feedback path between speaker 28 and the input microphone 24, cancelling sound waves are produced unnecessarily by the noise controller 26, until the system has time to adapt to the reduced level of the actual engine noise (more than 145 milliseconds). These cancelling sound waves then propagate through the air intake system 12, and are perceived as short bursts of undesirable induction noise 20 radiating from engine 10.

This embodiment reduces the time required for an active engine noise control system to respond to an abrupt change in engine loading. This is achieved by: (1) deriving a signal, which represents characteristics of the noise generated by the engine; (2) deriving an indication of the load on the engine; (3) modulating the amplitude of the signal representing engine noise, as a function of the indicated load on the engine; and (4) attenuating the engine noise based upon the amplitude modulated signal.

In the preferred embodiments, an indication of engine loading is derived by measuring the position of throttle valve 16 and developing a corresponding analog signal TP, which is directed as input to the electronic noise controller 26 (see Figure 1). Those skilled in the art will recognize that a number of other techniques are available for deriving an indication of engine loading, such as measuring engine mass air flow or intake manifold pressure, all of which could be used as alternative indications of engine loading.

In the embodiment shown in Figure 1, the engine generated induction noise is directly measured by input microphone 24, which then provides the INPUT signal representative of the engine induction noise. As mentioned above, the actual level of induction noise generated by engine 10 is a function of the degree of opening of the throttle valve. In fact, over the range of throttle valve position where induction noise is significant, the level of this noise is substantially a linear function of the throttle position indicated by the TP signal. In accordance with this embodiment, the response of controller 26 to abrupt changes in engine loading is improved by modulating the amplitude of the INPUT signal as a linear function of the throttle position signal TP. In practice, this is equivalent to multiplying the amplitude of the INPUT signal by the throttle position signal TP, which is made to vary in the range of 0 to 1 by the input circuitry of the noise controller 26 in dependence upon the position of the throttle.

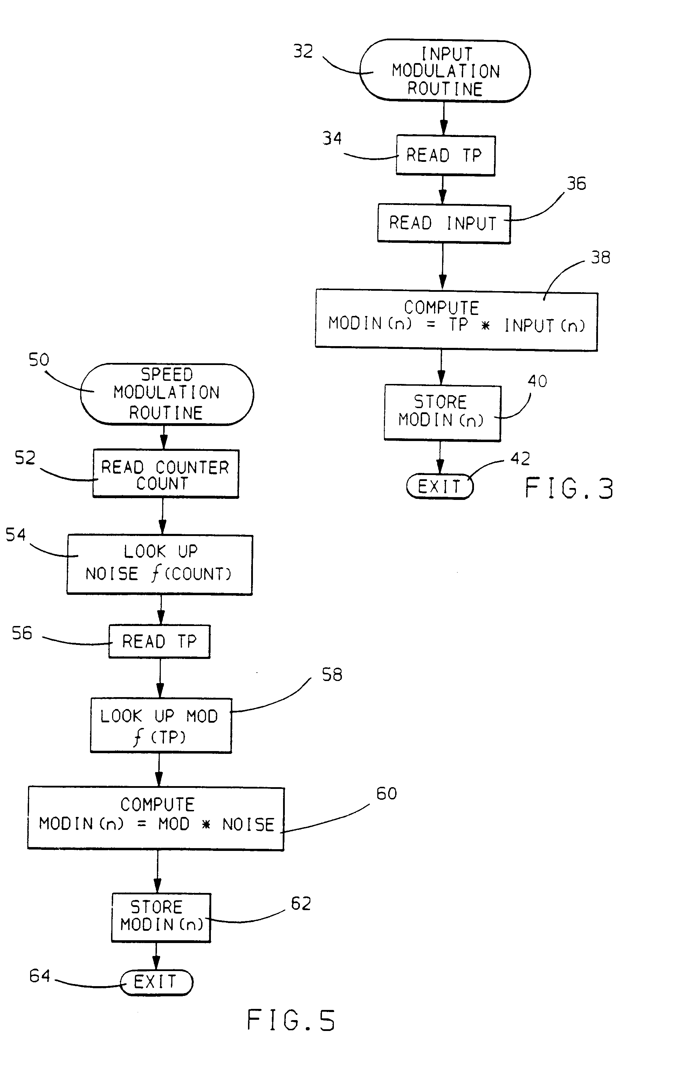

Referring now to Figure 3, there is shown a flow diagram representing the steps of an embodiment of software routine executed by electronic controller 26, when digitally multiplying the noise INPUT signal by the throttle position signal TP.

The Input Modulation Routine is entered at point 32, after each system interrupt associated with the sampling rate of the electronic noise controller, and thereafter, proceeds to step 34.

At step 34, the current value of the throttle position signal TP is read and stored in memory. This is accomplished by sampling the value of the analog throttle position signal TP, with an analog-to-digital converter incorporated in the noise controller 26, and then storing this value as a variable TP in the system random access memory.

Next at step 36, the current value of the engine induction noise, represented by the analog INPUT signal, is read and stored in memory as the new sampled value for the variable INPUT(n).

At the next step 38, a value for the variable MODIN(n) is computed by multiplying the value of INPUT-(n), determined at step 36, by the current value of the throttle position signal TP, determined at step 34.

From step 38 the program proceeds to step 40, where the new value for MODIN(n) is stored in memory. Included within the step of storing each new value for MODIN(n) is a shifting operation , where the previous value for MODIN(n) is shifted and saved as MODIN(n-1), the previous value for MODIN(n-1) is shifted and saved as MODIN(n-2), and so forth, down to the last retained sample in the sequence, MODIN-(1). Thus, the sequence of retained values MODIN(i) represents a sampled version of the INPUT signal, which has its amplitude modulated as a linear function of the position of throttle valve 16.

Next at step 42, the routine is exited, and the noise controller 26 functions in the conventional sense, with the exception that the samples of the amplitude modulated signal MODIN(i) are used instead of the samples of the unmodulated INPUT signal.

Referring now to Figure 2(D), there is shown a time history of an analog signal, which represents the derived signal MODIN(i). The amplitude of the MODIN signal decreases to zero as the throttle valve 16 is fully closed to eliminate the engine generated induction noise. In contrast, the unmodulated INPUT signal of Figure 2(B) has a significant amplitude long after the induction noise is actually eliminated. Thus, the amplitude modulated signal MODIN, provides a more accurate representation of the actual induction noise propagating in the air intake system 12. As a result, the noise controller 26 is able to provide a more accurate OUTPUT noise cancelling signal, as shown in Figure 2(E). The OUTPUT signal of Figure 2(E) has a smaller amplitude and decays more rapidly, than does the conventional OUTPUT signal of Figure 2(C). Consequently, the response of the active noise control system to an abrupt change in engine loading is significantly improved. Measured results from a four cylinder engine operated at 4000 rpm showed that the 145 millisecond burst in the observed induction noise 20, due to the level of the conventional OUTPUT signal (Figure 2(B)) after throttle closure, could be reduced in level and shortened to approximately 30 milliseconds, when the amplitude modulated representation of the engine noise MODIN was used in place of the unmodulated INPUT signal.

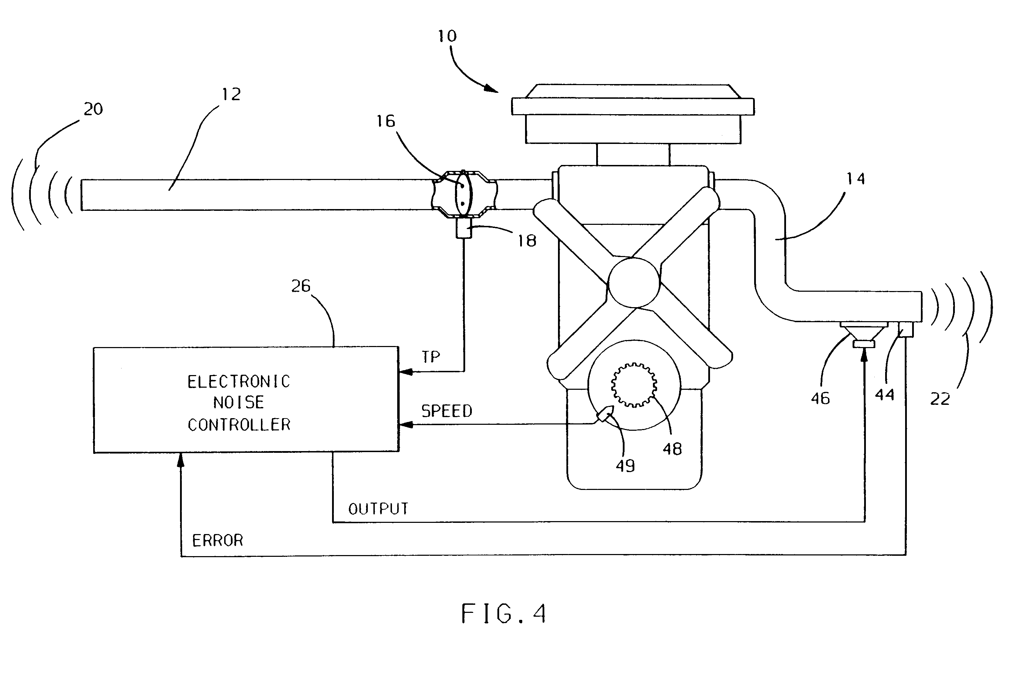

Another embodiment is shown schematically in Figure 4, which differs from that of Figure 1 in two respects. First, a cancellation speaker 46 and an error microphone 44 in Figure 4 are positioned on the engine exhaust system 14 to attenuate exhaust noise, rather than being located on the air intake system as in Figure 1. Secondly, a signal representing the noise generated by engine 10 is derived indirectly from an engine rotational SPEED signal, rather than from the direct acoustic measurement provided by the input microphone 24 of Figure 1.

The engine SPEED signal of Figure 4 can be derived from the electrical pulses produced by any standard engine rotational sensor. In the preferred embodiment, the rotational sensor includes a toothed wheel 48 mounted to the crankshaft of engine 10, and an electromagnetic sensor 49, which detects the passage of a tooth on wheel 48 and develops a corresponding electrical pulse.

The SPEED signal is processed by input conditioning circuitry within noise controller 26, to place it in the appropriate digital format. The formatted digital pulses representing crankshaft rotation are then passed to a standard frequency multiplier (or divider), so that a fixed number of pulses occur during one complete rotation of the engine crankshaft. These pulses are counted by a standard modulo counter, to provide a COUNT indicative of the rotational position of the crankshaft in the engine cycle at any given time. The number of teeth on wheel 48, the frequency multiplier (or divider), and the modulo counter are selected to provide an integer COUNT ranging in value from 0, to a maximum value of MAX, each time the engine completes a cycle, which represents two full rotations of the crankshaft in a four-stroke engine. Based upon these values for COUNT, noise controller 26 derives sample values representing the noise generated by engine 10.

Referring now to Figure 5, there is given a flow diagram representative of the program steps that would be executed by the electronic noise controller 26 of Figure 4 in: (1) deriving a signal that represents the engine noise based upon a measurement of engine speed, and then, (2) modulating the amplitude of that derived signal as a function of engine load.

The Speed Modulation Routine is entered at point 50, after each system interrupt associated with the sampling rate of the electronic noise controller 26. The program then proceeds to step 52, where the current COUNT of the previously described modulo counter is read and stored.

Next at step 54, a sample value Noise, which approximates the current engine noise, is looked up in a stored table, as a function of the COUNT found in the previous step 52. In this embodiment, stored values for the NOISE table can be computed according to the following general equation:

$$\text{NOISE = A sin(n*COUNT) + B sin(2*n*COUNT)} \\ \text{+ C sin(3*n*COUNT) + ... + M sin(m*n*COUNT),}$$

where, A, B, C, ... , and M represent the amplitudes of the harmonic components used in approximating the engine noise; n is a conversion constant given by $n = 2\pi/(MAX + 1)$; and the integer m represents the largest harmonic (related to one-half the engine rotational speed), that is retained in the approximation.

For the purpose of computing values for the NOISE table, the amplitudes A, B, C, ..., and M of the harmonic components, which are used in approximating the engine noise, are set equal to unity. Then values of NOISE are computed for each possible integer value of COUNT using the equation presented above. Prior to storage in the table, all of the calculated NOISE values are normalized to range between -1 and 1, by dividing each by the maximum NOISE magnitude computed.

Alternatively, relative values for the amplitudes A, B, C, ..., and M of the noise harmonics could be found by measuring the noise to be cancelled and determining an average amplitude value for each harmonic component, while running the engine on a dynamometer at different speeds over the operating range of the engine.

At step 56, noise controller 26 reads the current position of the throttle valve by sampling the value of the analog throttle position signal TP. This value for TP is stored and the program then proceeds to step 58.

At step 58, a value for MOD, the modulation factor, is looked up in a stored schedule, as a function of the current position of the throttle found in step 56. The modulation factor MOD is required because the level of exhaust noise produced by an engine is generally not a linear function of engine loading, determined by the position of the throttle valve, as was the case for engine induction noise. The schedule values for MOD will be engine dependent, but for a particular type of engine they can be determined by calibration measurements using an engine dynamometer. The value representing MOD for each particular throttle position can be found by determining the average level of exhaust noise produced, while varying engine speed over its normal operating range with the throttle position fixed . All such measured average values would be normalized prior to storage in the MOD schedule, by dividing each average value by the maximum average value found during testing. In this way, the stored values in the MOD schedule would be restricted to fall between 0 and 1.

Next at step 60, a derived value for MODIN(n) is computed by multiplying the value of MOD obtained at step 58 by the value of the engine noise NOISE found from the look up table at step 54.

From step 60 the program proceeds to step 62, where the new value for MODIN(n) is stored in memory. Prior to storing this new value for MODIN(n), the previous value is shifted and stored in MODIN(n-1), and so forth as to the other retained samples in the sequence. The sequence of retained values MODIN-(i), then represents amplitude modulated samples of NOISE that were derived from the SPEED signal to represent noise generated by engine 10.

Next at step 64, the routine is exited, with noise controller 26 functioning in the conventional sense, except that the samples of the amplitude modulated signal MODIN(i) are used in place of the samples of the unmodulated INPUT(i) signal.

It will be understood by those skilled in the art that the embodiments illustrated in Figures 1 and 4 can each be used to attenuate either engine induction or exhaust noise. The only structural alterations required are the repositioning of the system error microphone and cancellation speaker to the intake or exhaust system where the noise to be attenuated propagates. If the system error microphone and cancellation speaker of Figure 1 were positioned to cancel exhaust noise, the corresponding software routine of Figure 3 would have to be modified by including step 58 of Figure 5 between steps 36 and 38, and then multiplying INPUT(n) by MOD at step 38 instead of TP, to account for the nonlinear variation in the level of exhaust noise with throttle position. Likewise, if the system error microphone and cancellation speaker of Figure 4 were positioned to cancel induction noise, the corresponding software routine of Figure 5 would have to be modified by eliminating step 58, and then at step 60, multiplying NOISE by TP rather than by MOD, to account for the basically linear variation in the level of engine induction noise with throttle position.

**Claims**

1. A method of attenuating noise generated by an internal combustion engine, which engine (10) comprises an exhaust system (14) and an air intake system (12) including a throttle valve (16) for regulating air flow to the engine; the method comprising the steps of deriving a noise signal (INPUT) representative of the noise generated by the engine; deriving a loading signal (TP) indicative of engine loading; modulating the amplitude of the noise signal as a function of the engine loading signal; and attenuating noise generated by the engine (10) on the basis of the modulated noise signal.

2. A method according to claim 1, wherein the step of attenuating engine noise includes the steps of generating a noise cancelling waveform (OUTPUT) by filtering the modulated noise signal; and superimposing the noise cancelling waveform on the noise generated by the engine.

3. A method according to claim 2, comprising the step of adjusting the filtering of the modulated noise signal on the basis of a derived error signal (ERROR) representative of residual noise after attenuation.

4. A method according to claim 1, 2 or 3, wherein the engine noise attenuated is acoustic engine noise propagating in the engine air intake system; the loading signal being derived by measuring the position of the throttle valve (16); and the amplitude of the noise signal (INPUT) being modulated as a substantially linear function of the position of the throttle valve (16).

5. A method according to claim 1, 2 or 3, wherein the engine noise attenuated is acoustic engine noise propagating in the engine exhaust system; the loading signal being derived by measuring the position of the throttle valve (16); and the amplitude of the noise signal being modulated on the basis of a predetermined function of the position of the throttle valve (16).

6. A method according to any preceding claim, wherein the noise signal is obtained by acoustically measuring the engine noise with a microphone (24).

7. A method according to any one of claims 1 to 5, wherein the noise signal is derived from a measurement of engine rotation (SPEED).

8. Apparatus for attenuating noise generated by an internal combustion engine, which engine (10) comprises an exhaust system (14) and an air intake system (12) including a throttle valve (16) for regulating air flow to the engine; the apparatus comprising means (24,26) for deriving a noise signal (INPUT) representative of the noise generated by the engine; means (18,26) for deriving a loading signal (TP) indicative of engine loading; modulating means (26) for modulating the amplitude of the noise signal as a function of the engine loading signal; and attenuating means (26,28) for attenuating noise generated by the engine (10) on the basis of the modulated noise signal.

9. Apparatus according to claim 8, wherein the means for driving the loading signal comprises a throttle position sensor (18).

10. Apparatus according to claim 8 or 9, wherein the means for deriving the noise signal comprises an engine speed sensor (48,49).

11. Apparatus according to claim 8, 9 or 10, comprising an error sensor (30) adapted to derive an error signal (ERROR) representative of residual noise after attenuation by the attenuating means; the attenuating means comprising a filter adjustable on the basis of the error signal for filtering the modulated noise signal and being adapted to generate a noise cancelling waveform from the filtered modulated noise signal.

FIG.1

ELECTRONIC
NOISE
CONTROLLER

ERROR

OUTPUT

INPUT

TP

EP 0 470 656 A1

FIG.2

EP 0 470 656 A1

32 — INPUT MODULATION ROUTINE

34 — READ TP

36 — READ INPUT

38 — COMPUTE
MODIN(n) = TP * INPUT(n)

40 — STORE MODIN(n)

42 — EXIT

FIG.3

50 — SPEED MODULATION ROUTINE

52 — READ COUNTER COUNT

54 — LOOK UP NOISE $f$(COUNT)

56 — READ TP

58 — LOOK UP MOD $f$(TP)

60 — COMPUTE
MODIN(n) = MOD * NOISE

62 — STORE MODIN(n)

64 — EXIT

FIG.5

FIG.4

EP 0 470 656 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 098 594   (NISSAN)<br>– – – | 1,7-10 | F 01 N 1/06<br>F 02 M 35/12 |
| Y | EP-A-0 098 594   (* page 7, line 9 - page 9, line 6 * )<br>* page 10, line 21 - page 13, line 4; figures 5,8-10 * *<br>– – – | 2-6,11 | G 10 K 11/16 |
| Y | FR-A-2 385 972   (A.N.V.A.R.)<br>* page 3, line 19 - line 34; figure * *<br>– – – | 2,3,6,11 | |
| Y | PATENT ABSTRACTS OF JAPAN vol. 13, no. 360<br>(M-858)(3708) 11 August 1989<br>& JP-A-01 117 978 ( NIPPON SOKEN ) 10 May 1989<br>* the whole document * *<br>– – – | 4 | |
| Y | PATENT ABSTRACTS OF JAPAN vol. 13, no. 223<br>(M-829)24 May 1989<br>& JP-A-01 036 911 ( SANKEI KOGYO ) 7 February 1989<br>* the whole document * *<br>– – – | 5 | |
| A | PATENT ABSTRACTS OF JAPAN vol. 12, no. 207<br>(E-621)(3054) 14 June 1988<br>& JP-A-63 005 696 ( MITSUI ENG. ) 11 January 1988<br>* the whole document * *<br>– – – – – | | |

TECHNICAL FIELDS
SEARCHED (Int. Cl.5)

F 01 N
F 02 M
G 10 K
F 16 L

The present search report has been drawn up for all claims

| Place of search | Date of completion of search | Examiner |
|---|---|---|
| The Hague | 18 October 91 | SIDERIS M. |